# EUROPÄISCHE PATENTANMELDUNG

(11) **EP 2 296 073 A1**
(43) Veröffentlichungstag der Anmeldung: **16.03.2011**
(21) Anmeldenummer: 10075275.7
(22) Anmeldetag: 24.06.2010
(51) Int. Cl.: G05D 23/19, H01L 33/00, G02B 27/09

(54) **Vorrichtung zur Schwerpunktwellenlängenjustage emittierter optischer Strahlung**

(30) Priorität: 16.07.2009 DE 102009033979
(71) Anmelder: Schmidt & Haensch GmbH & Co., 13403 Berlin (DE)
(72) Erfinder: Yilmaz, Sükrü, 14059 Berlin (DE)
(74) Vertreter: Meissner, Peter E.

(57) **Zusammenfassung**

Vorrichtung für die exakte und geregelte Schwerpunktwellenlängenjustage emittierter Strahlung einer LED-Einheit mit mindestens einem in der optischen Achse der LED-Einheit nachgeschaltetem Interferenzfilter, wobei die LED-Einheit und das Interferenzfilter mit mindestens einer Temperiereinheit verbunden sind, und die Temperiereinheit mit mindestens einer Temperaturerfassungseinheit verbunden ist, wobei die Temperaturerfassungseinheit sowohl die Temperatur der LED-Einheit als auch des Interferenzfilters erfasst.

## Beschreibung

Die vorliegende Erfindung betrifft eine Vorrichtung zur exakten und geregelten Schwerpunktwellenlängenjustage emittierter Strahlung einer LED Einheit mit mindestens einem in der optischen Achse der LED-Einheit nachgeschaltetes Interferenzfilter.

Allgemein ist aufgrund der langen Lebensdauer und der kostengünstigen Herstellung von Halbleitern der Einsatz von Leuchtdioden (LED, light-emitting Diod) als Strahlungsquelle in Präzisionsmessgeräten, wie beispielsweise in Polarimetern, Spektrometern oder Refraktometern, bekannt.

Dabei muss die Schwerpunktswellenlänge der emittierten LED-Strahlung jedoch sehr genau justiert werden, da im Allgemeinen der genutzte physikalische Messeffekt eine große Wellenlängenabhängigkeit besitzt.

So beträgt im Fall einer so genannten Normallösung (Saccharoselösung) die Wellenlängenabhängigkeit des Messeffekts bei einer polarimetrischen Messung etwa 0,4% pro Nanometer. Der von der LED vorgegebene und exemplarisch streuende typabhängige Bereich der Schwerpunktswellenlänge der emittierten Strahlung hängt jedoch sehr stark von der Umgebungstemperatur und von der LED-Einheit ab.

Die Temperatur der LED-Einheit hängt sowohl vom elektrischen Strom als auch von der Umgebungstemperatur, und damit vom Einsatzort, ab. Durch diese, die Temperatur beeinflussenden Größen, können Verschiebungen bis zu einigen Nanometern auftreten.

Hierdurch ist, beispielsweise eine präzise polarimetrische Messung ohne weitere Maßnahmen unmöglich. Eine Absenkung oder Anhebung der Temperatur einer LED-Einheit führt immer zu einer Verschiebung der Schwerpunktswellenlänge und damit zu größeren bzw. zu kleineren Wellenlängen der emittierten optischen Strahlung. So ist, beispielsweise aus der Druckschrift US 4 701 607 A eine Vorrichtung mit einer Laserdiode bekannt, die temperaturgeführt ist. Die US 5 680 410 A offenbart eine Vorrichtung mit einem integrierten Temperaturregeleinheit. Aus der GB 2 292 479 A ist ein Spektroskop-System mit temperaturgeführten Laser bekannt. Des Weiteren offenbart die EP 0 516 398 A2 ein Verfahren und eine Vorrichtung zur Steuerung des Lichtspektrums eine Leuchtdiode.

Um die Schwerpunktswellenlängenverschiebung der Messstrahlung möglichst zu minimieren, werden im Stand der Technik optische Interferenzfilter beschrieben, die hinter der Strahlungsquelle angeordnet sind. Ist das emittierte Strahlungsspektrum der Strahlungsquelle dabei sehr breit, bezogen auf den Durchlässigkeitsbereich des optischen Filters, wird die Schwerpunktswellenlänge im Wesentlichen durch das Filter festgelegt. Befinden sich jedoch der Durchlässigkeitsbereich des Filters und die Spektralbreite der emittierten Strahlung in derselben Größenordnung, ergibt sich aus der Multiplikation der Filtercharakteristik mit dem Strahlungsspektrum eine resultierende Messstrahlung.

In beiden Fällen ist die Schwerpunktswellenlänge jedoch auf Dauer nicht stabil, da das Interferenzfilter natürlichen Alterungsprozessen unterliegt und es somit zu einer zeitlichen Veränderung des Durchlässigkeitsbereiches kommt. Diese Veränderung der Durchlässigkeit muss regelmäßig durch eine aufwändige Lageveränderung (Kippung im Lichtstrahl) des Filters ausgeglichen werden. Auch die Interferenzfilter unterliegen Temperatureinflüssen wie jede physikalische Größe. Die Durchlasswellenlänge der verwendeten Lichtquelle ist temperaturabhängig. Sie wird bei einer Temperaturerhöhung länger und bei einer Temperaturerniedrigung entsprechend kürzer.

Wenn sich das Strahlungsspektrum der Lichtquelle und der Durchlässigkeitsbereich des optischen Filters etwa in derselben Größenordnung befinden, kann es neben der langsamen Veränderung der Filtereigenschaften auch kurzfristig zu einer Verschiebung der Schwerpunktswellenlänge der resultierenden Messstrahlung führen, wenn es zu einer Änderung der Temperatur der LED-Einheit kommt. Gerade in diesem Fall kann auch eine unmittelbar zuvor durchgeführte aufwändige Nachjustage des optischen Filters durch Lageveränderung keinen Abgleich erzielen.

Es ist daher Aufgabe der vorliegenden Erfindung, eine Vorrichtung zur exakten und geregelten Schwerpunktwellenlängenjustage der emittierten optischen Strahlung einer Leuchtdiode zu schaffen.

Diese Aufgabe wird durch die in den Patentanspruch 1 angegebenen Merkmale gelöst. Vorteilhafte Ausführungsformen der Erfindung sind Gegenstand der Unteransprüche.

Die erfindungsgemäße Vorrichtung umfasst eine LED-Einheit, mit mindestens einem in der optischen Achse der LED-Einheit nachgeschaltetes Interferenzfilter. Die LED-Einheit und das Interferenzfilter sind mit mindestens einer Temperiereinheit verbunden. Die Temperiereinheit ist wiederum mit mindestens einer Temperaturerfassungseinheit verbunden, wobei die Temperaturerfassungseinheit sowohl die Temperatur der LED-Einheit als auch des Interferenzfilters erfasst.

Mit der erfindungsgemäßen Vorrichtung kann somit besonders schnell eine exakte und geregelte Schwerpunktwellenlängenjustage der emittierten optischen Strahlung einer Leuchtdiode vorgenommen werden. Ein mechanisches Nachjustieren, des Interferenzfilters ist somit entbehrlich.

In einer besonders bevorzugten Ausführungsform der erfindungsgemäßen Vorrichtung ist das Interferenzfilter in Einbaulage relativ zur LED-Einheit horizontal und senkrecht zur emittierten Strahlung drehbar ausgebildet. Hierdurch kann eine exakte Schwerpunktwellenlänge, beispielsweise für eine gewünschte Betriebstemperatur, voreingestellt werden.

In einer bevorzugten Ausführungsform der erfindungsgemäßen Vorrichtung sind die Temperaturerfassungseinheit und die Temperiereinheit mit einer Regeleinheit wirkverbunden, die in Abhängigkeit von den durch die Temperaturerfassungseinheit ermittelten Ist-Werten die Temperatureinheit auf einen bestimmten Soll-Wert regelt. Durch den sehr kurzen Übertragungsweg kann somit eine schnelle und möglichst verlustfreie Temperaturerfassung, Auswertung und Einregelung sichergestellt werden. Hierfür können alle notwendigen Bauteilgruppen auf einer Grundplatte angeordnet sein.

In einer weiteren bevorzugten Ausführungsform der erfindungsgemäßen Vorrichtung ist die Temperiereinheit ein Peltierelement. Die Vorteile eines Peltierelements sind die geringe Größe und die Vermeidung jeglicher bewegter Bauteile. Hierdurch wird eine sehr Kompakte Bauweise der Vorrichtung gewährleistet. Zudem kann durch Umkehr der Stromrichtung mit dem Peltierelement sowohl gekühlt als auch geheizt werden.

Gemäß einer vorteilhaften Ausführungsform der erfindungsgemäßen Vorrichtung sind die LED-Einheit und die Temperaturerfassungseinheit einstückig ausgebildet. Hierdurch wird ein besonders kompaktes Bauelement geschaffen, welche den Einbau auch in portablen Klein-Geräten erlaubt.

In einer weiteren vorteilhaften Ausführungsform der erfindungsgemäßen Vorrichtung sind die LED-Einheit und das Interferenzfilter in unmittelbarer räumlicher Nähe zur Temperaturerfassungseinheit und der Temperiereinheit auf einer gemeinsamen Grundplatte angeordnet. Hierdurch kann ein kurzer thermischer Übertragungsweg sichergestellt. Es ist dabei auch denkbar, dass das Peltierelement selbst als Grundplatte fungieren kann.

In einer weiteren bevorzugten Ausführungsform der erfindungsgemäßen Vorrichtung ist dem Peltierelement ein Kühlkörper zugeordnet. Überschüssige Wärme kann direkt an den Kühlkörper abgegeben werden. Ein unmittelbares Einregeln eines bestimmten Temperatursollwertes kann hierdurch erheblich erleichtert werden.

Um eine Standardisierung des Nennwiderstands und der Widerstandsänderung sicherzustellen und auch eine leichte Austauschbarkeit der Temperaturfühler, ohne das anschließend eine Neukalibrierung der Messkette notwendig wird, ist die Temperaturerfassungseinheit, in einer weiteren bevorzugten Ausführungsform der erfindungsgemäßen Vorrichtung ein PT-Temperaturfühler oder ein PTC-Temperaturfühler oder ein NTC-Temperaturfühler oder ein Halbleitertemperaturfühler.

Gemäß einer bevorzugten Ausführungsform der erfindungsgemäßen Vorrichtung ist die Temperiereinheit mittels einer wärmeleitenden Schicht mit der Grundplatte verbunden. Somit kann sichergestellt werden, dass ein möglichst verlustfreier thermodynamischer Übergang zu der Temperaturerfassungseinheit der LED-Einheit und dem Interferenzfilter geschaffen wird.

In einer vorteilhaften Ausführungsform der erfindungsgemäßen Vorrichtung ist die Temperiereinheit unidirektional. Hierdurch kann eine aufwendige Ansteuerung der Temperiereinheit eingespart werden.

In einer weiteren vorteilhaften Ausführungsform der erfindungsgemäßen Vorrichtung ist die Temperiereinheit eine Heizfolie mit einem Heizwiderstand.

In einer bevorzugten Ausführungsform der erfindungsgemäßen Vorrichtung ist die Temperiereinheit ein bidirektionales Temperierelement, dem eine wärmeleitende Schicht und ein Kühlkörper zugeordnet sind. Dies stellt eine kurze Reaktionszeit auf die Soll- und Ist-Temperatur sicher. Sowohl eine Temperaturerhöhung, als auch eine Temperaturabsenkung kann hierdurch umgehend eingestellt werden.

In einer weiteren bevorzugten Ausführungsform der erfindungsgemäßen Vorrichtung ist die Regeleinheit ein Zweipunktregler oder ein PID-Regler oder ein p-Controler zugeordnet. Insbesondere der PID-Regler ist am anpassungsfähigsten, da er keine bleibende Regelabweichung bei Führungs- und Störgrößensprung aufweist und kann zwei Verzögerungen (T1-Glieder) der Regelstrecke kompensieren und damit die Regelstrecke vereinfachen.

Der Erfindung liegt ferner die Aufgabe zugrunde ein Verfahren zur Schwerpunktwellenlängenjustage emittierter optischer Strahlung für eine solche vorteilhafte Vorrichtung zur Verfügung zustellen, welches die alterungsbedingte optischen Eigenschaften eines nachgeschalteten Interferenzfilters ausgleicht.

Diese Aufgabe wird durch die in den Patentanspruch 14 angegebenen Merkmale gelöst. Vorteilhafte Ausführungsformen der Erfindung sind Gegenstand der Unteransprüche.

Das erfindungsgemäße Verfahren zur exakten und geregelten Schwerpunktwellenlängenjustage emittierter Strahlung aus einer LED-Einheit in Kombination mit einem Interferenzfilter umfasst die Schritte des Verbindens der LED-Einheit und des Interferenzfilters mit einer Temperiereinheit und die gleichzeitige Erfassung der Temperaturen der LED-Einheit und des Interferenzfilters durch eine diesen zugeordneten Temperaturerfassungseinheit, wobei eine Regeleinheit, die in Anhängigkeit von der durch die Temperaturerfassungseinheit ermittelten Temperaturen der LED-Einheit und des Interferenzfilters die Temperiereinheit ansteuert und eine Temperaturerhöhung oder eine Temperaturabsenkung der LED-Einheit und des Interferenzfilters, in Abhängigkeit von einem Ist-Wert zum vorbestimmten Soll-Wert dynamisch einregelt.

Das erfindungsgemäße Verfahren zur exakten und geregelten Schwerpunktwellenlängenjustage emittierter Strahlung aus einer LED-Einheit in Kombination mit einem Interferenzfilter, in einer Vorteilhaften Ausführungsform mit dem Schritt, dass die von der Temperiereinheit eingestellte und von der Regeleinheit überwachte Temperatur der LED-Einheit und des Interferenzfilters auf einen bestimmten Wert justiert und in Abhängigkeit von der gewünschten Schwerpunktwellenlänge durch drehen des Interferenzfilters in Einbaulage um die Horizontale, senkrecht zur emittierten Strahlung des Interferenzfilters den Schwerpunktwellenlängenwert der emittierten Strahlung der LED-Einheit einstellt.

Durch diese Maßnahmen wird ein Verfahren geschaffen, mit dem eine schnelle und sichere Schwerpunktwellenlängeneinstellung der emittierten Strahlung einer Leuchtdiode über lange Zeit gewährleistet werden kann. Die alterungsbedingte Schwerpunktwellenlängeverschiebungen der emittierten Strahlung der Leuchtdiode kann somit ausgeglichen werden.

Die Verwendung der oben beschriebenen Erfindung erfolgt in einem Polarimeter.

Die Verwendung der oben beschriebenen Erfindung erfolgt in einem Refraktometer.

Die Verwendung der oben beschriebenen Erfindung erfolgt in einem Spektrometer.

Es versteht sich, dass die vorstehend genannten und die nachstehend noch zu erläuternden Merkmale nicht nur in den angegebenen Kombinationen oder Ausführungsformen, sondern auch in anderen Kombinationen, mit Merkmalen anderer Ausführungsformen oder in Alleinstellung einsetzbar sind, ohne den Rahmen der vorliegenden Erfindung zu verlassen.

Die Erfindung wird im Folgenden anhand einer beispielhaften Ausführungsform unter Bezugnahme auf die beigefügte Zeichnung näher erläutert. Es zeigt:

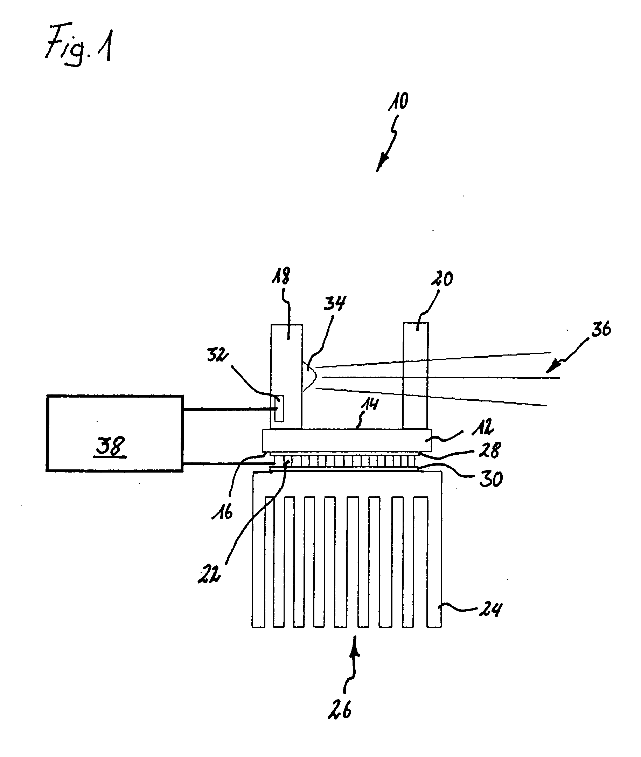

- Fig. 1: eine schematische Seitenansicht der erfindungsgemäßen Vorrichtung.

Wie in Fig. 1 dargestellt, besteht die Vorrichtung 10 im Wesentlichen aus einer Grundplatte 12, die eine Oberseite 14 und eine Unterseite 16 aufweist. Auf der Oberseite 14 ist eine LED-Einheit 18, beispielsweise ein LED-Chip angeordnet. Im Strahlengang der LED-Einheit 18 ist ebenfalls auf der Oberseite 14 der Grundplatte 12 ein Interferenzfilter 20 angeordnet.

Die Unterseite 16 der Grundplatte 12 ist mit einer Temperiereinheit 22 wirkverbunden. Die Temperiereinheit 22 ist ihrerseits mit einem Kühlkörper 24 verbunden. In dieser Ausführungsform weist der Kühlkörper 24 eine Vielzahl von Kühlrippen 26 auf. Zusätzlich kann dem Kühlkörper 24 eine Ventilatoreinheit (nicht dargestellt) zugeordnet sein, um gegebenenfalls anfallende Wärme noch effizienter abführen zu können.

Der Temperiereinheit 22 ist flächig ausgebildet und ist in diesem Ausführungsbeispiel ein Peltierelement. Der Temperiereinheit 22 sind eine wärmeleitende Schicht 28 und eine wärmeleitende Schicht 30, zugeordnet, die in etwa die gleichen Abmessungen aufweisen wie diese selbst. Die wärmeleitenden Schichten 28 und 30 sind dabei so ausgebildet, dass sie einen thermodynamisch günstigen Übergang zwischen der Unterseite 16 der Grundplatte 12 und dem Kühler 26 ausbilden.

Der LED-Einheit 18 ist eine Temperaturerfassungseinheit 32 zugeordnet. In diesem Ausführungsbeispiel sind die Temperaturerfassungseinheit 32 und die LED-Einheit 18 einstückig ausgebildet. Die LED-Einheit 18 weist eine Leuchtdiode 34 auf. Die von der Leuchtdiode 34 emittierte optische Strahlung 36 wird in Richtung des Interferenzfilters abgestrahlt.

Die Temperaturerfassungseinheit 32, und die Temperiereinheit 22 sind miteinander durch eine Regeleinheit 38 verbunden. Die Regeleinheit 38 steuert dabei die Temperiereinheit 22 in Abhängigkeit von einem vorgegebenen Soll-Wert und dem durch die Temperaturerfassungseinheit 32 erfassten aktuellen Ist-Wert. Die Temperiereinheit 22 hat im Wesentlich die gleichen Abmessungen wie die Grundplatte 12 und temperiert im gleichen Maße die LED-Einheit 18 als auch das Interferenzfilter 20.

Nachfolgend werden die Funktionsweise der Vorrichtung und des Verfahrens dargelegt:

Erfindungsgemäß wird die Temperatur bei der LED-Einheit 18 und dem Interferenzfilter 20 direkt von einer Temperaturerfassungseinheit 32 abgegriffen. Dabei ist die LED-Einheit 18 mit einer Temperiereinheit 22 verbunden. Die von der Temperaturerfassungseinheit 32 kommende Ausgangsgröße dient als Eingangsgröße einer Regeleinheit 38. Der Ausgang der Regeleinheit 38 ist mit der Temperiereinheit 22 verbunden. Über die von der Regeleinheit 38 vorgegebene und von der Temperiereinheit 22 erzeugte Temperatur wird die Temperatur der LED-Einheit 18 und des Interferenzfilters 20 erhöht oder abgesenkt, so dass die Schwerpunktswellenlänge der emittierten Strahlung 36 zu größeren bzw. kleineren Wellenlängen verschoben und dadurch exakt justiert werden können.

Befindet sich eine optische Filtereinheit, hier ein Interferenzfilter 20, vor der Strahlungsquelle, hier eine Leuchtdiode 34, kann durch einfache Änderung der Temperatur der LED-Einheit 18 über die Regeleinheit 38 eine alterungsbedingte Veränderung des Interferenzfilters 20 ohne aufwändige Lageveränderung nachjustiert werden. Soll die Schwerpunktswellenlänge der emittierten Strahlung 36 einen bestimmten Wert aufweisen, muss die emittierte Strahlung 36 mit einer geeigneten Methode, beispielsweise Spektrometrie, erfasst und mittels der Regeleinheit 38 auf den gewünschten Wert eingestellt werden. Alternativ dazu kann das Verfahren auch Bestandteil eines Gerätes, beispielsweise eines Polarimeter oder eines Refraktometer sein, das zusammen mit einem Quarzstandard den Wert der Schwerpunktswellenlänge der emittierten Strahlung 36 indirekt bestimmt.

Abhängig von der gewünschten und vorliegenden Schwerpunktswellenlänge kann durch Kippung des Interferenzfilters 20 der Wert der Schwerpunktswellenlänge der emittierten Strahlung 36 der Leuchtdiode 34 voreingestellt werden. Jede danach auftretend eventuelle Änderung der Wellenlänge während der Lebensdauer des Messgerätes kann, beispielsweise durch Kontrollmessungen mittels einer kalibrierten Quarzplatte festgestellt werden. Mittels der Regeleinheit 38 kann nun der Soll-Wert über die Änderung der Temperatur wieder eingestellt werden.

Soll die Schwerpunktswellenlänge der emittierten Strahlung 36 einen bestimmten Wert besitzen, muss die Ausgangsgröße der Regeleinheit 38 so eingestellt werden, bis die emittierte Strahlung 36 die gewünschte Schwerpunktswellenlänge besitzt.

Die von der Temperaturerfassungseinheit 32 gelieferte Ausgangsgröße wird direkt an den Eingang einer Regeleinheit 38 (z. B. einen 2-Punkt-Regler, einen PID-Regler oder einen p-Controller etc.) angelegt. Der Ausgang 12 der Regeleinheit 38 stellt die Temperiereinheit 22 dann auf die vorgegebene Temperatur ein und justiert so die Schwerpunktswellenlänge.

Es sei noch erwähnt, dass es auch möglich ist, sowohl für die LED wie auch das Interferenzfilter eine eigene Temperiereinheit und jeweils eine Temperaturerfassung vorzusehen. Dies ist aber aufwendiger und komplexer im Aufbau, in der Handhabung und damit vergleichsweise teurer.

### Bezugszeichen

- 10: Vorrichtung
- 12: Grundplatte
- 14: Oberseite 5
- 16: Unterseite
- 18: LED-Einheit
- 20: Interferenzfilter
- 22: Temperiereinheit
- 24: Kühlkörper
- 26: Kühlrippen
- 28: wärmeleitende Schicht
- 30: wärmeleitende Schicht
- 32: Temperaturerfassungseinheit
- 34: Leuchtdiode
- 36: emittierte optische Strahlung
- 38: Regeleinheit

## Patentansprüche

1. Vorrichtung zur exakten und geregelten Schwerpunktwellenlängenjustage emittierter Strahlung einer LED-Einheit mit mindestens einem in der optischen Achse der LED-Einheit nachgeschalteten Interferenzfilter, **dadurch gekennzeichnet, dass** die LED-Einheit (18) und das Interferenzfilter (20) mit mindestens einer Temperiereinheit (22) verbunden sind, und die Temperiereinheit (22) mit mindestens einer Temperaturerfassungseinheit (32) verbunden ist, wobei die Temperaturerfassungseinheit (32) sowohl die Temperatur der LED-Einheit (18) als auch die des Interferenzfilters (20) erfasst.

2. Vorrichtung nach Anspruch 1, **dadurch gekennzeichnet, dass** das Interferenzfilter (20) in Einbaulage relativ zur LED-Einheit (18) horizontal und senkrecht zur emittierten Strahlung (36) drehbar ausgebildet ist.

3. Vorrichtung nach Anspruch 1 oder 2, **dadurch gekennzeichnet, dass** die Temperaturerfassungseinheit (32) und die Temperiereinheit (22) mit einer Regeleinheit (38) wirkverbunden sind, die in Abhängigkeit von den durch die Temperaturerfassungseinheit (32) ermittelten Ist-Werten die Temperiereinheit (22) auf einen bestimmten Soll-Wert regelt.

4. Vorrichtung nach einem der vorangehenden Ansprüche, **dadurch gekennzeichnet, dass** die Temperiereinheit (22) ein Peltierelement ist.

5. Vorrichtung nach einem der vorangehenden Ansprüche, **dadurch gekennzeichnet, dass** die LED-Einheit (18) und die Temperaturerfassungseinheit (32) einstückig ausgebildet sind.

6. Vorrichtung nach einem der vorangehenden Ansprüche, **dadurch gekennzeichnet, dass** die LED-Einheit (18) und das Interferenzfilter (20) in unmittelbarer räumlicher Nähe zur Temperaturerfassungseinheit (32) und der Temperiereinheit (22) auf einer gemeinsamen Grundplatte (12) angeordnet sind.

7. Vorrichtung nach einem der vorangehenden Ansprüche, **dadurch gekennzeichnet, dass** dem Peltierelement (22) ein Kühlkörper (24) zugeordnet ist.

8. Vorrichtung nach einem der vorangehenden Ansprüche, **dadurch gekennzeichnet, dass** die Temperaturerfassungseinheit (32) ein PT-Temperaturfühler oder ein PTC-Temperaturfühler oder ein NTC-Temperaturfühler oder ein Halbleitertemperaturfühler ist.

9. Vorrichtung nach einem der vorgehenden Ansprüche, **dadurch gekennzeichnet, dass** die Temperiereinheit (22) mittels einer wärmeleitenden Schicht (28) mit der Grundplatte (12) verbunden ist.

10. Vorrichtung nach einem der vorangehenden Ansprüche, **dadurch gekennzeichnet, dass** die Temperiereinheit (22) unidirektional ist.

11. Vorrichtung nach einem der vorangehenden Ansprüche, **dadurch gekennzeichnet, dass** die Temperiereinheit (22) eine Heizfolie mit einem Heizwiderstand ist.

12. Vorrichtung nach einem der Ansprüche 1 bis 9, **dadurch gekennzeichnet, dass** die Temperiereinheit (22) ein bidirektionales Temperierelement ist, dem eine wärmeleitende Schicht (28, 30) und ein Kühlkörper (24) zugeordnet ist.

13. Vorrichtung nach einem der vorangehenden Ansprüche, **dadurch gekennzeichnet, dass** der Regeleinheit (38) ein Zweipunktregler oder ein PIDRegler oder ein p-Controler zugeordnet ist.

14. Verfahren zur exakten und geregelten Schwerpunktwellenlängenjustage emittierter Strahlung aus einer LED-Einheit in Kombination mit einem Interferenzfilter, **gekennzeichnet durch** das Verbinden der LED-Einheit (18) und des Interferenzfilters (20) mit mindestens einer Temperiereinheit (22) und die gleichzeitige Erfassung der Temperaturen der LED Einheit (18) und des Interferenzfilters (20) **durch** eine diesen zugeordneten Temperaturerfassungseinheit (32), wobei eine Regeleinheit (38), die in Abhängigkeit von der **durch** die Temperaturerfasseinheit (32) ermittelten Temperaturen der LED-Einheit (18) und des Interferenzfilters (20) die Temperiereinheit (22) ansteuert und eine Temperaturerhöhung oder eine Temperaturabsenkung der LED-Einheit (18) und des Interferenzfilters (20), in Abhängigkeit von einem Ist-Wert zum vorbestimmten Soll-Wert dynamisch einregelt.

15. Verfahren nach dem vorangehenden Anspruch 14, **dadurch gekennzeichnet, dass** die von der Temperiereinheit (22) eingestellte und von der Regeleinheit (38) überwachte Temperatur der LED-Einheit (18) und des Interferenzfilters (20) auf einen bestimmten Wert justiert und in Abhängigkeit von der gewünschten Schwerpunktwellenlänge durch drehen des Interferenzfilters (20) in Einbaulage um die Horizontale, senkrecht zur emittierten Strahlung (36), den Schwerpunktwellenlängenwert der emittierten Strahlung (36) der LED-Einheit (18) eingestellt wird.

16. Verwendung der Vorrichtung und des Verfahrens nach einem oder mehreren der Ansprüche 1 bis 13, **dadurch gekennzeichnet, dass** sie in einem Polarimeter erfolgt.

17. Verwendung der Vorrichtung und des Verfahrens nach einem oder mehreren der Ansprüche 1 bis 13, **dadurch gekennzeichnet, dass** sie in einem Refraktometer erfolgt.

18. Verwendung der Vorrichtung und des Verfahrens nach einem oder mehreren der Ansprüche 1 bis 13, **dadurch gekennzeichnet, dass** sie in einem Spektrometer erfolgt.
